# EUROPÄISCHE PATENTSCHRIFT

(11) **EP 2 279 141 B1**
(45) Veröffentlichungstag und Bekanntmachung des Hinweises auf die Patenterteilung: **11.05.2016**
(21) Anmeldenummer: 09730082.6
(22) Anmeldetag: 02.04.2009
(51) Int. Cl.: B65G 1/137

(54) **LAGERREGAL MIT AUTOMATISCHER LAGERORTBUCHUNG**
STORAGE SHELF WITH AUTOMATIC LOCATION REGISTRATION
RAYONNAGE À ENREGISTREMENT AUTOMATIQUE DE L'EMPLACEMENT DE STOCKAGE

(30) Priorität: 11.04.2008 DE 102008001843
(43) Veröffentlichungstag der Anmeldung: 02.02.2011
(73) Patentinhaber: Hänel & CO., 9450 Altstätten (CH)
(72) Erfinder: WALTER, Franz, 74229 Oedheim (DE)
(74) Vertreter: Flügel Preissner Schober Seidel
(86) Internationale Anmeldenummer: PCT/EP2009/053964
(87) Internationale Veröffentlichungsnummer: WO 2009/124878

(56) Entgegenhaltungen:
- DE-A1- 4 318 341
- DE-A1- 10 013 092
- DE-A1-102006 015 689
- DE-A1-102006 031 054
- DE-C1- 3 809 520
- GB-A- 2 419 722

## Beschreibung

Die Erfindung betrifft ein Lagerregal nach dem Oberbegriff des Anspruchs 1, mit einer Vielzahl von übereinander angeordneten Trägerstützen zur Abstützung von Lagergutträgern, die mittels einer automatischen Beschickungs- und Entnahmevorrichtung förderbar sind. Das Lagerregal weist mindestens eine Zugangsöffnung zur Zuführung und Entnahme der Lagergutträger sowie einen Rechner auf, in dem Informationen über eingelagertes Lagergut abgespeichert sind. An dem Lagerregal ist wenigstens eine Bilderfassungseinrichtung vorgesehen, die zur optischen Erfassung des in den Lagergutträgern abgelegten Lagerguts geeignet ist und daraus eine digitale Bildinformation erzeugen kann, wobei die digitale Bildinformation in dem Rechner abgespeichert werden kann und mittels einer Anzeigeeinrichtung abrufbar ist. Der Anzeigeeinrichtung ist eine Auswahleinrichtung beigeordnet, mit der anhand der digitalen Bildinformationen ein Lagergutträger auswählbar und mittels des Rechners in die Zugangsöffnung verfahrbar ist. Weiterhin betrifft die Erfindung ein Verfahren zur Einlagerung und Auslagerung von Lagergut in einem derartigen Lagerregal sowie ein Computerprogrammprodukt zur Durchführung eines derartigen Verfahrens.

Derartige Lagerregale sind unter der Bezeichnung Vertikallift aus dem Stand der Technik bekannt. Bei solchen Lagerregalen wird zur Beschickung mit oder zur Entnahme von Lagergut jeweils ein Lagergutträger in die Zugangsöffnung verfahren. Sobald der Lagergutträger in der Zugangsöffnung bereitsteht, kann die Bedienperson Lagergut in den Lagergutträger einlegen oder dem Lagergutträger entnehmen.

DE 100 13 092 A1 offenbart ein gattungsgemaßes automatisches Lagerregal mit einer Zugangsöffnung zur Zuführung, Entnahme und Beschickung von Lagergutträgern. Vor einer Einlagerung wird von den Lagergutträgern ein Bild gemacht, das sich ein Bediener anzeigen lassen kann, um den Inhalt und den Beladungszustand eines Lagergutträgers anzusehen.

Moderne Lagerregale der eingangs genannten Art verfügen über eine Steuerung, die der Lagerhaltung dient und in der abgelegt ist, welches Lagergut in welchem Lagergutträger aufbewahrt ist. Dadurch kann durch die Bedienperson der entsprechende Lagergutträger einfach aufgefunden werden.

Zur Vereinfachung der Lagerhaltung schlägt die DE 198 28 659 A1 bei einem Lagerregal mit festen Lagerböden, auf denen Behältnisse zur Lagerung von Lagergut abgestellt werden, vor, Lichtschranken vorzusehen, die die Entnahme von Gegenständen aus den Behältnissen registrieren und eine solche Entnahme von Gegenständen an eine Steuereinheit melden.

Aus der DE 43 18 341 A1 ist ein Verfahren zur Ein- und Auslagerung von quaderförmigem Stückgut sowie eine Vorrichtung zur Durchführung dieses Verfahrens offenbart. Bei diesem Verfahren werden Arzneimittel in quaderförmigen Packungen auf einem Förderband vereinzelt. Anschließend wird versucht, mit Hilfe von Erfassungseinrichtungen einen Strichcode auf den Seiten der Packung zu erkennen. In einem weiteren Schritt werden Höhe, Breite und Länge der einzelnen Packungen erfasst. In einer Steuereinrichtung ist für Lagerschübladen ein Beladungsplan abgelegt. Durch einen Vergleich dieses Beladungsplans mit der ermittelten Größe der einzelnen Verpackungen wird ein freier Lagerplatz auf einer der Schubladen ausgewählt. Anschließend wird die Arzneimittelpackung an diesen Ort verschoben. Die Interaktion einer Bedienperson mit den Schubladen ist nicht vorgesehen, da die Belegungsdaten, die in der Steuereinrichtung abgelegt sind, in einem solchen Fall nicht aktualisiert würden und somit die Auswahl freien Lagerplatzes falsche Ergebnisse zurückgeben würde.

Die DE 201 21 417 U1 zeigt ein Lagerregal mit einem Großteil der eingangs genannten Merkmale. Ein in dem Rechner abgespeichertes Bilderfassungsprogramm kann ein Rastersystem generieren, mit dessen Hilfe freie Lagerplätze in Lagergutträgern erfassbar und anzeigbar sind.

Die Erfindung geht auf die **Aufgabe** zurück, bei einem Lagerregal der eingangs genannten Art den Einlagerungsvorgang zu beschleunigen und die Lagerhaltung sowie die Ermittlung freier Lagerplätze zu vereinfachen.

Zur **Lösung** dieser Aufgabe wird ein Lagerregal gemäß Patentanspruch 1 vorgeschlagen.

Vorteilhafte Ausgestaltungen des erfindungsgemäßen Lagerregals sind Gegenstand der Unteransprüche 2 bis 8.

Bei dem erfindungsgemäßen Lagerregal wird der Lagerplatz von neu eingelagertem Lagergut automatisch erkannt und in den Informationen über eingelagertes Lagergut vermerkt. Ebenso werden freie Lagerplätze von dem Rechner anhand der digitalen Bildinformation erkannt. Dies hat den Vorteil, dass freie Lagerplätze auch dann erkannt werden, wenn das Lagergut in den Lagergutträgern verrutscht ist. Es ist auch für die Erkennung freier Lagerplätze keine ortspräzise Einlagerung mehr notwendig und das Lagerregal kann mit Lagergut jeglicher Form beschickt werden.

Das erfindungsgemäße Lagerregal macht es für die Bedienperson entbehrlich, dem Rechner anzugeben, an welcher Stelle des in die Zugangsöffnung verfahrenen Lagergutträgers das neu eingelagerte Lagergut abgelegt wurde. Ebenso ist es bei einer Entnahme von Lagergut nicht mehr notwendig, den vorherigen Lagerort des Lagergutes an den Rechner zu übermitteln. Des Weiteren wird die Auswahl eines Lagergutträgers mit einem ausreichend großen freien Lagerplatz vereinfacht. Der Einlagerungsvorgang wird somit beschleunigt und die Zuverlässigkeit der über die Beladungssituation gespeicherten Daten erhöht.

Das Lagerregal kann eine kontaktlose Erfassungseinrichtung zur Erkennung von Lagergut aufweisen. Da die Bedienperson eine Lagergutidentifikation nicht mehr von Hand eingeben muss, werden dadurch ebenfalls der Ein- oder Auslagerungsvorgang beschleunigt sowie die Zuverlässigkeit der vorliegenden Daten verbessert.

Das Lagergut kann zu seiner Identifikation eine drahtlose Transpondereinrichtung aufweisen und dem Lagerregal kann eine Kommunikationseinrichtung für drahtlose Transponder beigeordnet sein, die zur Übermittlung von Identifikationsdaten an den Rechner ausgebildet ist.

Vorteilhaft weist die drahtlose Transpondereinrichtung ein RFID-Etikett auf. Derartige Etiketten sind aus dem Stand der Technik vielfältig bekannt und in diversen Formen erhältlich. Insbesondere sind solche Etiketten als kleine Aufkleber mit geringem Gewicht und Volumen sowie einfacher Handhabbarkeit zu finden.

Die Kommunikationseinrichtung kann eine RFID-Empfangseinrichtung aufweisen. Eine solche RFID-Empfangseinrichtung bietet die Möglichkeit, sämtliche mit einem RFID-Etikett gekennzeichneten Objekte im Bereich der Zugangsöffnung und/oder im Bereich des Lagergutträgers kontaktlos und ohne die Notwendigkeit einer optischen Zugänglichkeit, wie sie für die Erkennung von Strichcodes notwendig ist, zu erfassen.

Zur Ermittlung eines freien Lagerplatzes kann der Rechner einen Größendatenspeicher mit Daten aufweisen, die den Platzbedarf von bestimmten Lagergütern angeben. Dies verbessert die Genauigkeit eines Vorschlags für einen freien Lagerplatz zur Einlagerung eines Lagergutes.

Die Anzeigeeinrichtung kann zur Anzeige einer Voransicht des ermittelten freien Lagerplatzes ausgebildet sein. Somit kann eine Bedienperson sich, bereits während der Lagergutträger aus dem Lagerregal entnommen und in die Zugangsöffnung verfahren wird, auf dem Lagergutträger orientieren, so dass die Suche nach dem freien Lagerplatz auf dem Lagergutträger verkürzt wird.

Zur Kommunikation von Einheiten des Lagerregals untereinander weist dieses ein LAN oder einen CAN-Bus auf. Derartige Kommunikationswege sind in einem industriellen Umfeld störungsarm und zuverlässig betreibbar.

Des Weiteren wird ein Verfahren gemäß Patentanspruch 9 zur Ein- oder Auslagerung von Lagergut in einem erfindungsgemäßen Lagerregal vorgeschlagen
Das erfindungsgemäße Verfahren ermöglicht eine zuverlässige Aktualisierung der Belegungsinformationen, bei der der Einfluss von Bedienerfehlern minimiert wird.

Vorteilhafte Ausgestaltungen des Verfahrens sind Gegenstand der Ansprüche 10 bis 20.

Der durch den Rechner bei Einlagerung ermittelte Lagerplatz kann einer Bedienperson mittels der Anzeigeeinrichtung angezeigt werden und von dieser abgelehnt werden, worauf ein weiterer freier Lagerplatz ermittelt wird. Dies ermöglicht eine Überprüfung des vorgeschlagenen Lagerplatzes.

Der durch den Rechner bei Auslagerung ermittelte Lagerort des Lagerguts kann einer Bedienperson mittels der Anzeigeeinrichtung angezeigt werden. Dadurch kann die Bedienperson den Lagerplatz auf dem Lagergutträger einfacher auffinden.

Vorteilhaft teilt die Bilddatenverarbeitungseinrichtung die digitalen Bilddaten in ein Raster auf, dessen Rasterelemente in den Belegungsinformationen als frei oder belegt gekennzeichnet werden können. Dies verringert den Aufwand bei der Verarbeitung der Bilddaten, so dass für den Rechner und die Bilddatenverarbeitungseinrichtung preiswerte und stromsparende Bauteile verwendet werden können.

Die Bilderfassungseinrichtung kann zum Abgleich der Belegungsinformationen vor und nach der Ein- oder Auslagerung ein Bild des Lagergutträgers erfassen und an den Bildarchivspeicher übermitteln. Dadurch ist festgehalten, welche Veränderungen an dem Lagergutträger von der Bedienperson vorgenommen wurden.

Die Bilddatenverarbeitungseinrichtung kann für jedes Pixel eines Rasterelements eine Differenz zwischen dem Pixel des vor der Ein- oder Auslagerung erfassten Bildes und dem Pixel des nach der Ein- oder Auslagerung erfassten Bildes bilden und die Differenzen innerhalb eines Rasterelements aufsummieren, um einen Ähnlichkeitswert zu berechnen. Dadurch kann die Bilddatenverarbeitungseinrichtung erkennen, in welchen Rasterelementen Veränderungen durch die Ein- oder Auslagerung aufgetreten sind.

Die Bilderfassungseinrichtung kann darüber hinaus ein Verfahren zum Erkennen freier Rasterelemente durchführen, bei dem der Anteil der Pixel, deren Farbwerte in einem Identifikationsbereich liegen, ermittelt wird und das Rasterelement als unbelegt markiert wird, wenn der Anteil einen definierten Grenzwert überschreitet. Dadurch kann, insbesondere bei neu eingelagerten Lagergutträgern, freier Platz ermittelt werden, ohne auf archivierte Bilddaten zurückgreifen zu müssen.

In einer Ausgestaltung des Verfahrens führt die Bilderfassungseinrichtung das Verfahren zum Erkennen freier Rasterelemente für jedes Rasterelement eines Lagergutträgers durch.

Vorteilhaft weist der Rechner eine Datenbank auf, in der Lagerorte und/oder Lagermengen des Lagergutes abgelegt werden. Somit ist einmal ein gelagertes Lagergut einfach wieder auffindbar.

Zum Abgleich der Belegungsinformationen kann der Rechner den anhand der digitalen Bildinformationen ermittelten Lagerort und die Identifikation des eingelagerten Lagergutes in der Datenbank ablegen. Dadurch ist es nicht mehr bei jeder Nachfrage nach einem freien Lagerplatz oder einem bestimmten Lagergut notwendig, die zeitaufwendige Bilddatenverarbeitung erneut durchzuführen.

Der Rechner kann vor und nach dem Ein- oder Auslagervorgang eine Liste der in dem Lagergutträger enthaltenen Lagergüter erstellen und durch einen Vergleich der Listen die entnommenen und eingelagerten Lagergüter bestimmen. Dadurch wird die Zuverlässigkeit der Datenbank weiter erhöht.

Des Weiteren wird zur Lösung der Aufgabe ein Computerprogrammprodukt zur Durchführung des Verfahrens nach einem der Ansprüche 9 bis 20 vorgeschlagen, das zur Ausführung in dem Rechner und/oder der Bilddatenverarbeitungseinrichtung und/oder dem Bilddatenarchivspeicher ausgebildet ist.

Einzelheiten und weitere Vorteile des erfindungsgemäßen Lagerregals sowie des erfindungsgemäßen Verfahrens ergeben sich aus der nachfolgenden Beschreibung eines bevorzugten Ausführungsbeispiels. In den das Ausführungsbeispiels lediglich schematisch darstellenden Zeichnungen veranschaulichen im Einzelnen:
- Fig. 1: ein Lagerregal mit Erfassungs-, Anzeige- und Verarbeitungseinrichtungen;
- Fig. 2: ein Blockschaltbild des Rechners;
- Fig. 3: ein Flussdiagramm zur Verdeutlichung eines Ein- oder Auslagerungsvorgangs;
- Fig. 4: ein Flussdiagramm mit einem Verfahren zur Erkennung von Veränderungen in einem Lagergutträger;
- Fig. 5a: ein Photo eines Lagergutträgers vor einem Einlagerungsvorgang mit Raster;
- Fig. 5b: ein Photo wie in Fig. 5a nach einem Einlagerungsvorgang und
- Fig. 6: ein Flussdiagramm zu einem Verfahren zur Erkennung von freiem Lagerplatz.

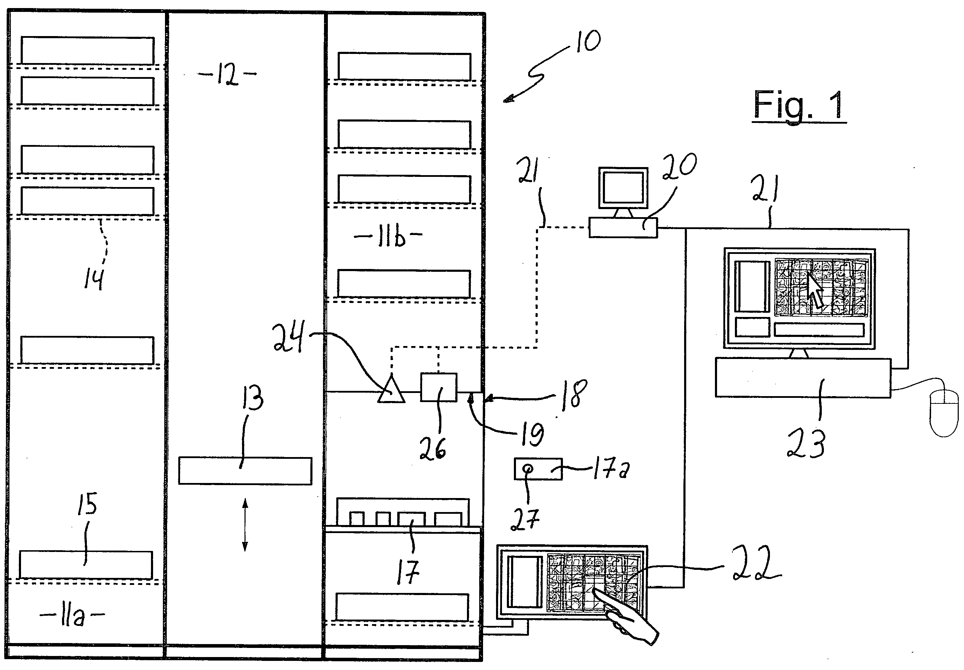

Das in Figur 1 dargestellte Lagerregal 10 weist zwei mit Abstand zueinander angeordnete Module 11 a, 11 b auf. Die Module 11 a, 11 b weisen eine Vielzahl von beabstandeten, paarweise angeordneten Trägerstützen 14 auf, die an gegenüberliegenden Seitenwänden angeordnet sind. Die Trägerstützen 14 dienen der Abstützung von trogförmig ausgebildeten Lagergutträgern 15, in denen Lagergut 17 aufgenommen wird.

Zwischen den Modulen 11 a, 11 b ist ein Förderraum 12 vorgesehen, in dem eine verfahrbare automatische Beschickungs- und Entnahmevorrichtung 13 angeordnet ist, mit der die Lagergutträger 15 förderbar sind.

An dem Modul 11 b ist eine Zugangsöffnung 18 vorgesehen, über die die Lagergutträger 15 zugeführt oder entnommen werden können. Ebenso ist es möglich, einem in die Zugangsöffnung 18 verfahrenen Lagergutträger 15 Lagergut 17 zu entnehmen und/oder in diesen einzulagern.

Dem Lagerregal 10 ist ein Rechner 20 beigeordnet, welcher unter anderem der Steuerung des Lagerregals 10 dient. Mit dem Rechner 20 sind über ein LAN 21, also über ein lokales Rechnernetzwerk, ein an dem Lagerregal 10 angeordnetes Bediengerät 22, sowie eine eigenständig betreibbare Sichtungsstation 23 angebunden.

In einer Oberseite 19 der Zugangsöffnung 18 ist eine Bilderfassungseinrichtung 24 in Form einer digitalen Kamera angeordnet. Die digitale Kamera 24 ist so angeordnet, dass sie einen jeweils in die Zugangsöffnung 18 verfahrenen Lagergutträger 15 vollständig erfassen kann.

Zur Übermittlung digitaler Bilddaten an dem Rechner 20 ist die digitale Kamera 24 mit diesem mittels des LAN 21 verbunden.

Mit dem LAN 21 ist ebenfalls eine kontaktlose Erfassungseinrichtung in Form eines RFID-Empfängers 26 verbunden. Das Lagergut 17 ist mit RFID-Etiketten 27 versehen, so dass das Lagergut 17 durch den RFID-Empfänger 26 identifiziert werden kann.

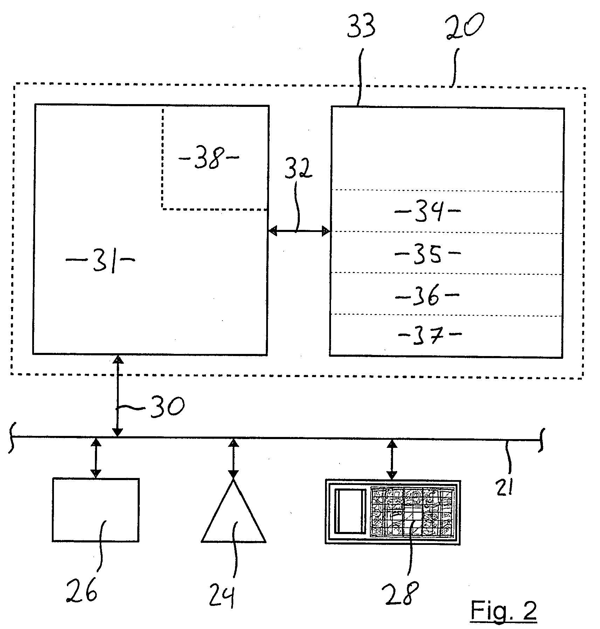

Der in Figur 2 gezeigte Rechner 20 ist mittels einer Kommunikationsschnittstelle 30 mit dem LAN 21 verbunden. Über das LAN 21 kann der Rechner 20 somit Daten mit dem RFID-Empfänger 26, der digitalen Kamera 24 und einer Anzeigeeinrichtung 28 austauschen. Des Weiteren ist die Beschickungs- und Entnahmevorrichtung 13 über das LAN 21 ansprechbar (hier nicht gezeigt).

Dem Bediengerät 22 ist eine Steuereinrichtung (nicht gezeigt) zur Steuerung der Beschickungs- und Entnahmevorrichtung 13 beigeordnet, welche die Steuerung der Entnahme und Einlagerung von Lagergutträgern 15 übernimmt. Der Rechner 20 kann mit dieser Steuereinrichtung kommunizieren und ist dadurch von der unmittelbaren Steuerung der Mechanik des Lagerregals 10 entbunden. Ebenso ist es mittels dieser Steuerung auch ohne den Rechner 20 möglich, das Lagerregal 10 mittels des Bediengeräts 22 zu bedienen.

Der Rechner 20 weist eine Zentraleinheit 31 auf, die mittels einer Speicherschnittstelle 32 mit einem Arbeitsspeicher 33 verbunden ist. Teile des Arbeitsspeichers 33 dienen als Bilddatenarchivspeicher 34, Größendatenspeicher 35, Lagerdatenbank 36 sowie als Belegungsinformationsspeicher 37.

Die Zentraleinheit 31 weist eine Bilddatenverarbeitungseinrichtung 38 zur Verarbeitung der von der digitalen Kamera 24 gelieferten Bilddaten auf. Die von der digitalen Kamera 24 gelieferten Bilddaten werden zusammen mit einem Metadatensatz in dem Bilddatenarchivspeicher 34 abgelegt. Der Metadatensatz enthält beispielsweise Angaben über den fotografierten Lagergutträger 15, Datum und Zeit der Aufnahme, eine Angabe darüber, ob das Bild vor oder nach dem Zugriff einer Bedienperson aufgenommen wurde sowie einen Identifikationscode der Bedienperson, die das Verfahren des Lagergutträgers 15 in die Zugangsöffnung 18 veranlasst hat.

Der Größendatenspeicher 35 enthält Größen- und Gewichtsangaben für verschiedenes Lagergut 17. Jedem Lagergut 17 ist eine Teilenummer zugeordnet, mit deren Hilfe beispielsweise die Größe des Lagergutes 17 aus dem Größendatenspeicher 35 abrufbar ist.

Ebenfalls anhand der Teilenummer sind aus der Lagerdatenbank 36 Daten zu Lagerorten von Lagergut 17 mit einer bestimmten Teilenummer abrufbar.

Der Belegungsinformationsspeicher 37 enthält zu jedem Lagergutträger 15 Informationen, welche Bereiche des Lagergutträgers 15 durch Lagergut 17 belegt und welche Bereiche frei sind.

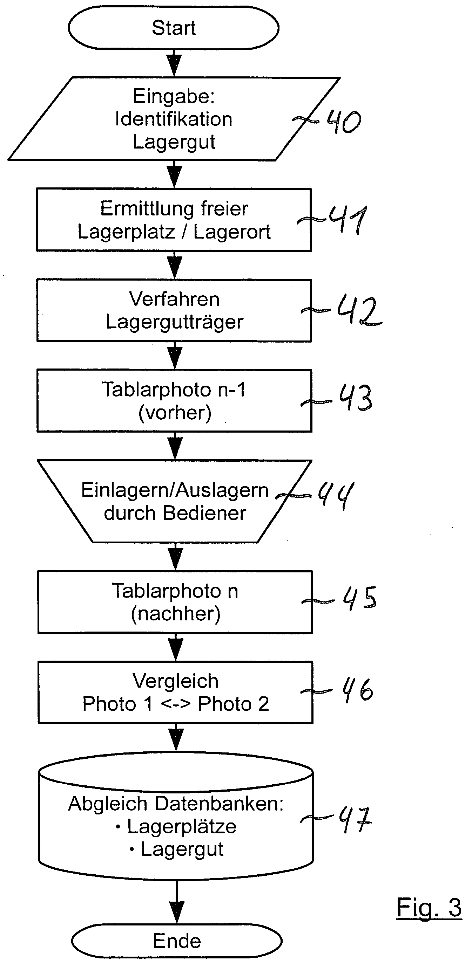

Der Ablauf eines Einlagerungsvorgangs in dem Lagerregal 10 ist in Figur 3 gezeigt. In einem ersten Schritt 40 identifiziert eine Bedienperson dem Rechner 20 gegenüber ein neu einzulagerndes Lagergut 17a. Dies geschieht dadurch, dass das an dem Lagergut 17a befindliche RFID-Etikett 27 in den Empfangsbereich des RFID-Empfängers 26 gebracht wird. Bei Lagergut 17a, das für die Anbringung eines RFID-Etiketts 27 zu klein oder nicht geeignet ist, kann die Identifizierung auch beispielsweise durch Eingabe einer Teilenummer an dem Bediengerät 22 oder der Sichtungsstation 23 erfolgen.

Die Bedienperson trägt an ihrer Kleidung ebenfalls ein RFID-Etikett 27, das die Identität der Bedienperson an den RFID-Empfänger 26 übermittelt.

In einem weiteren Schritt 41 ermittelt der Rechner 20 anhand der Identifikation des Lagerguts 17a dessen Größe aus dem Größendatenspeicher 35. Anschließend durchsucht der Rechner 20 den Belegungsinformationsspeicher 37 nach einem freien Lagerplatz ausreichender Größe. Sobald solch ein Lagerplatz gefunden ist, wird in einem weiteren Verfahrensschritt 42 der Lagergutträger 15 mit dem freien Lagerplatz in die Zugangsöffnung 18 verfahren.

Sobald der Lagergutträger 15 in der Zugangsöffnung 18 angelangt ist, wird in einem Schritt 43 von der digitalen Kamera 24 ein Bild des Lagergutträgers 15 erfasst. Das Bild wird an dem Rechner 20 ermittelt und von diesem mit der Information, dass dieses Bild einen Zustand vor einer Bedienerhandlung darstellt, in dem Bilddatenarchivspeicher 34 abgelegt.

In einem Schritt 44 lagert die Bedienperson das Lagergut 17a in einen freien Lagerplatz in dem Lagergutträger 15 ein. Auf dem Bediengerät 22 wird dazu ein Vorschlag für einen freien Lagerplatz angezeigt.

Ist die Einlagerung beendet, so gibt dies die Bedienperson an dem Bediengerät 22 ein, worauf in einem weiteren Verfahrensschritt 45 die digitale Kamera 24 ein Bild des Lagergutträgers 15 erfasst und dieses Bild an den Rechner 20 übermittelt. Der Rechner 20 lagert das Bild mit dem Vermerk, dass es einen Zustand nach einer Bedienerhandlung beinhaltet, in den Bilddatenarchivspeicher 34 ein.

In einem Vergleichsschritt 46 vergleicht der Rechner 20 mit seiner Bilddatenverarbeitungseinrichtung 38 die vor und nach der Bedienerhandlung aufgenommen Bilder und ermittelt Änderungen in der Belegung des Lagergutträgers.

Aufgrund dieser ermittelten Änderungen werden in einem Schritt 47 die Lagerdatenbank 36 und der Belegungsinformationsspeicher 37 aktualisiert.

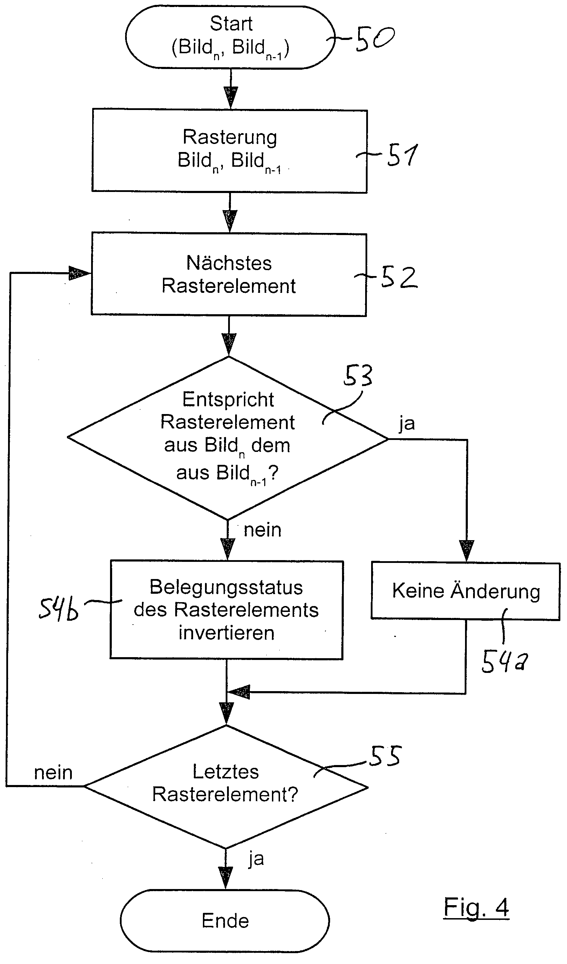

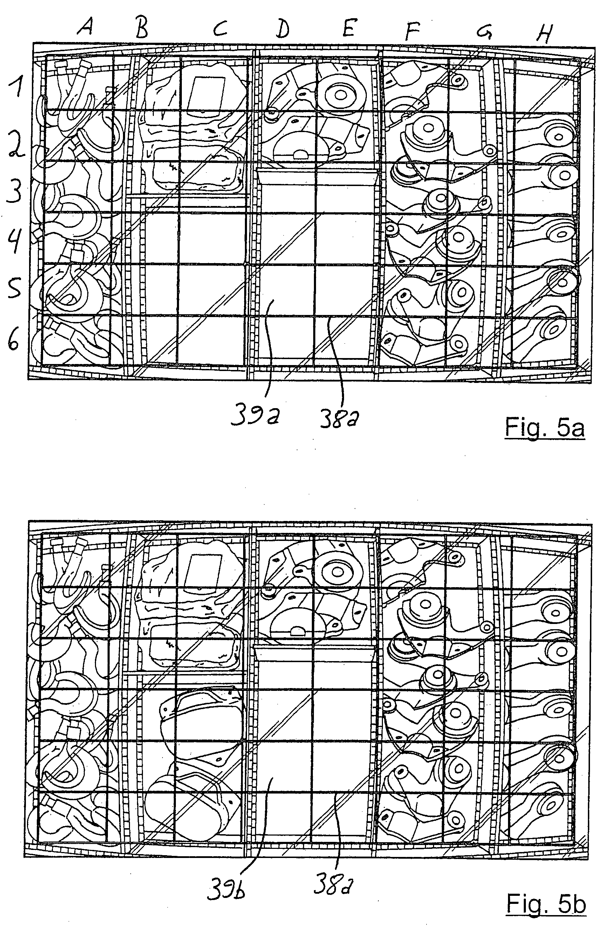

Um die Veränderungen des Beladungszustandes zu ermitteln, führt die Bilddatenverarbeitungseinrichtung 38 ein Verfahren aus, wie es in Figur 4 gezeigt ist. Die Bilddatenverarbeitungseinrichtung 38 entnimmt in einem ersten Schritt 50 dem Bilddatenarchivspeicher 34 zwei Bilder. Das in Figur 5a gezeigte erste Bild 39a wurde vor dem Einlagerungsvorgang aufgenommen, das in Figur 5b gezeigte zweite Bild 39b wurde nach dem Einlagerungsvorgang aufgenommen.

Nachdem diese Bilder 39a, 39b dem Bilddatenarchivspeicher 34 entnommen worden sind, werden sie von der Bilddatenverarbeitungseinrichtung 38 in einem Schritt 51 mit einem Raster 38a versehen.

Die Bilddatenverarbeitungseinrichtung 38 sucht in einem Schritt 52 ein zu bearbeitendes Rasterelement aus. In einem Schritt 53 wird das Rasterelement des Bildes 39a mit dem Rasterelement des Bildes 39b Pixel für Pixel verglichen. Entsprechen sich die Rasterelemente, wie dies beispielsweise für die Elemente A3 und G1 der Fall ist, so wird in einem Schritt 54a der Belegungsstatus des Rasterelements in dem Belegungsinformationsspeicher 37 nicht verändert.

Hat sich in dem verglichenen Rasterelement jedoch eine Veränderung zwischen dem Bild 39a und dem Bild 39b ergeben, wie dies in den Rasterelementen C4 bis C6 der Fall ist, so wird in einem Schritt 54b der Belegungsstatus des Rasterelements in dem Belegungsinformationsspeicher 37 invertiert.

Im nächsten Schritt 55 überprüft die Bilddatenverarbeitungseinrichtung 38, ob sie sämtliche Rasterelemente miteinander verglichen hat. Ist dies nicht der Fall, wird bei Schritt 52 mit einem neuen Rasterelement fortgesetzt.

Wurde hingegen das letzte Rasterelement verglichen, so wird die Erkennung der Änderungen beendet.

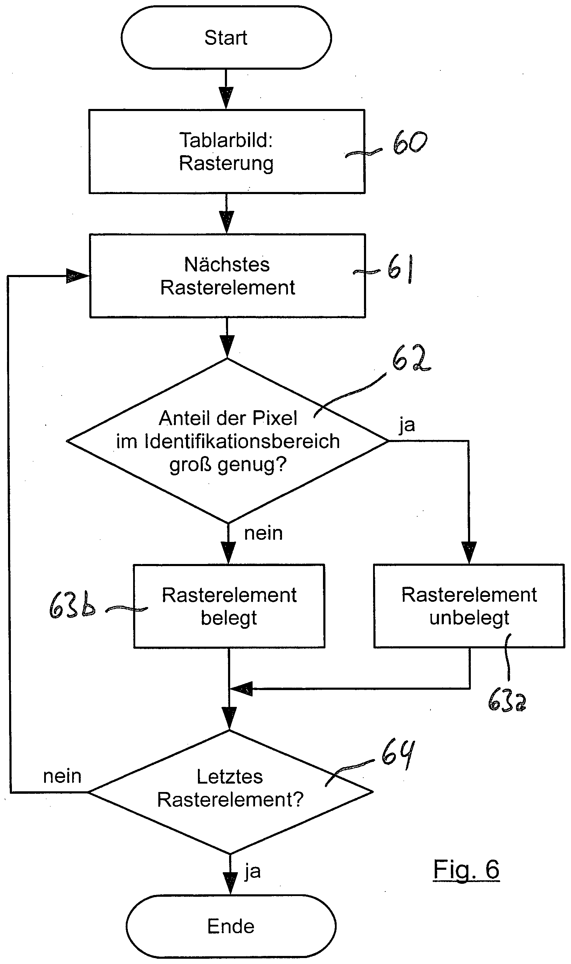

Um die Erkennung des freien Lagerplatzes weiter zu verbessern, führt die Bilddatenverarbeitungseinrichtung 38 zusätzlich das in Figur 6 gezeigte Verfahren aus. Dazu übernimmt die Bilddatenverarbeitungseinrichtung 38 zunächst das nach dem Einlagerungsvorgang aufgenommene Bild 39b aus dem Bilddatenarchivspeicher 34.

In einem ersten Schritt 60 wird über das Bild 39b ein Raster 38a gelegt. Die Bilddatenverarbeitungseinrichtung 38 wählt ein Rasterelement zur Überprüfung in Schritt 61 aus. In einem Schritt 62 ermittelt die Bilddatenverarbeitungseinrichtung 38 den Anteil der Pixel des Rasterelements, deren Farbwerte in einem Identifikationsbereich liegen.

Der Identifikationsbereich ist so gewählt, dass in einem Rasterelement ohne Lagergut ein Großteil der Pixel in dem Identifikationsbereich liegt. Ist der Boden der Lagergutträger 15 beispielsweise weiß, so kann der Identifikationsbereich für alle Farben gleichmäßig von 80% Helligkeit bis 100% Helligkeit reichen. Ist der Boden des Lagergutträgers 15 hingegen schwarz, so ist für den Identifikationsbereich beispielsweise der Bereich von 0% bis 20% Helligkeit auszuwählen. Bei einem hellgrünen Boden wird der Identifikationsbereich beispielsweise für grün von 80%-100% und für rot und blau je von 60%-90% reichen.

Nach der Ermittlung des Anteils der Pixel in dem Identifikationsbereich vergleicht die Bilddatenverarbeitungseinrichtung 38 den Anteil mit einem Referenzwert, der in diesem Fall 80% betragen soll. Liegen also die Farbwerte von wenigstens 80% der Pixel des Rasterelements in dem Identifikationsbereich, so wird das Rasterelement in einem Arbeitsschritt 63a als unbelegt gekennzeichnet. Sind hingegen weniger als 80% der Farbwerte der Pixel des Rasterelement in dem Identifikationsbereich, so wird in einem Arbeitsschritt 63b das Rasterelement in dem Belegungsinformationsspeicher 37 als belegt gekennzeichnet.

In vereinfachter Form des Verfahrens können die Farbwerte der Pixel vor dem Vergleich in Grauwerte umgewandelt werden. Der dadurch erreichten Einsparung an notwendiger Rechenleistung steht jedoch eine geringere Genauigkeit bei der Erkennung freien Lagerplatzes gegenüber.

In einem Schritt 64 überprüft die Bilddatenverarbeitungseinrichtung 38, ob sie sämtliche Rasterelemente überprüft hat. Ist dies nicht der Fall, so fährt sie mit Schritt 61 und einem neuen Rasterelement fort. Sind hingegen sämtliche Rasterelemente bearbeitet, so beendet die Bilddatenverarbeitungseinrichtung 38 die Erkennung des freien Lagerplatzes.

Um eindeutig bestimmen zu können, welches Lagergut 17, 17a bei einer Einoder Auslagerung eingelagert oder entnommen wurde, werden vor der Einoder Auslagerung die RFID-Etiketten 27 der in dem Lagergutträger 15 enthaltenen Lagergüter 17 abgefragt. Das Ergebnis wird nach der Ein- oder Auslagerung mit dem Ergebnis einer neuen Abfrage verglichen. RFID-Etiketten 27, die neu hinzukommen, zeigen neu eingelagertes Lagergut 17a an, während fehlende RFID-Etiketten 27 entnommenes Lagergut 17 identifizieren.

Das beschriebene Verfahren liegt ebenfalls als Computerprogrammprodukt vor, das zur Ausführung durch den Rechner 20 bestimmt ist. Der Rechner 20 ist in diesem Fall ein Steuerrechner für das Lagerregal 10. Es wäre ebenso denkbar, einen Industrie-PC mit einer Schnittstelle für das Lagerregal 10 bzw. dessen Beschickungs- und Entnahmevorrichtung 13 sowie mit einer Schnittstelle für das LAN 21 zu versehen und ein entsprechendes Computerprogrammprodukt in einem solchen Rechner 20 auszuführen.

Statt des LAN 21 kann ein CAN-Bus zur Kommunikation der Einheiten untereinander vorgesehen sein.

Sollte das Sichtfeld der digitalen Kamera 24 nicht zur Erfassung des gesamten Lagergutträgers 15 ausreichen, so können mehrere digitale Kameras 24 vorgesehen sein, deren Einzelbilder von der Bilddatenverarbeitungseinrichtung 38 zu einem Gesamtbild des Lagergutträgers 15 zusammengesetzt werden können.

Das erfindungsgemäße Lagerregal zusammen mit dem erfindungsgemäßen Verfahren bietet eine einfache und zuverlässige Möglichkeit, Bedienerfehler zu verringern und den Einlagerungs- und Auslagerungsvorgang in einem Lagerregal 10 zu beschleunigen.

**Bezugszeichenliste**

| | | | |
|---|---|---|---|
| 10 | Lagerregal | 37 | Belegungsinformationsspeicher |
| 11a | Modul | 38 | Bilddatenverarbeitungseinrichtung |
| 11b | Modul | 38a | Raster |
| 12 | Förderraum | 39a | Bild 1 |
| 13 | Beschickungs- und Entnahmevorrichtung | 39b | Bild 2 |
| | | 40-47 | Verfahrensschritte |
| 14 | Trägerstütze | 50-55 | Verfahrensschritte |
| 15 | Lagergutträger | 60-64 | Verfahrensschritte |
| 17 | Lagergut | | |
| 17a | Lagergut | | |
| 18 | Zugangsöffnung | | |
| 19 | Oberseite | | |
| 20 | Rechner | | |
| 21 | LAN | | |
| 22 | Bediengerät | | |
| 23 | Sichtungsstation | | |
| 24 | Bilderfassungseinrichtung (digitale Kamera) | | |
| 26 | RFID-Empfänger (kontaktlose Erfassungseinrichtung) | | |
| 27 | RFID-Etikett | | |
| 30 | Kommunikationsschnittstelle | | |
| 31 | Zentraleinheit | | |
| 32 | Speicherschnittstelle | | |
| 33 | Datenspeicher | | |
| 34 | Bilddatenarch ivspeicher | | |
| 35 | Größendatenspeicher | | |
| 36 | Lagerdatenbank | | |

## Patentansprüche

1. Lagerregal (10) mit einer Vielzahl von übereinander angeordneten Trägerstützen (14) zur Abstützung von Lagergutträgern (15), die mittels einer automatischen Beschickungs- und Entnahmevorrichtung (13) förderbar sind,
mit mindestens einer Zugangsöffnung (18) zur Zuführung und Entnahme der Lagergutträger (15),
mit einem Rechner (20), in dem Informationen über eingelagertes Lagergut (17, 17a) abgespeichert sind,
wobei wenigstens eine Bilderfassungseinrichtung (24) vorgesehen ist, die zur optischen Erfassung des in den Lagergutträgern (15) abgelegten Lagerguts (17, 17a) geeignet ist und daraus eine digitale Bildinformation erzeugen kann,
wobei die digitale Bildinformation in dem Rechner (20) abgespeichert wird und mittels einer Anzeigeeinrichtung (22, 23) abgerufen wird, wobei der Rechner (20) einen Bilddatenarchivspeicher (34) zur Archivierung der digitalen Bildinformation der Lagergutträger (15) und eine Bilddatenverarbeitungseinrichtung (38) aufweist, **dadurch gekennzeichnet, dass**
der Anzeigeeinrichtung (22) eine Auswahleinrichtung beigeordnet ist, mit der anhand der digitalen Bildinformationen ein Lagergutträger (15) auswählbar und mittels des Rechners (20) in die Zugangsöffnung (18) verfahrbar ist, wobei
der Rechner (20) einen Bilddatenarchivspeicher (34) zur Archivierung der digitalen Bildinformation der Lagergutträger (15) in dem Bilddatenarchivspeicher (34) aufweist, wobei das Bild durch den Rechrer (20) mit der Information, of das Bild einen Zustand vor oder nach einer Bedienerhandlung darstellt, in dem Bilddatenarchivspeicher (34) abgelegt wird, wobei die Bilddatenverarbeitungseinrichtung (38) zur Erkennung von Veränderungen der Beladungssituation von Lagergutträgern (15) und/oder zur Erkennung freier Lagerplätze anhand der digitalen Bildinformationen aus dem Bilddatenarchivspeicher (34) mittels eines Vergleichs von Bildinformationen, die vor und nach einer Bedienerhandlung aufgenommen wurden, ausgebildet ist.

2. Lagerregal nach Anspruch 1, **dadurch gekennzeichnet, dass** das Lagerregal (10) eine kontaktlose Erfassungseinrichtung (26) zur Erkennung von Lagergut (17, 17a) aufweist.

3. Lagerregal nach Anspruch 2, **dadurch gekennzeichnet, dass** das Lagergut (17, 17a) zu seiner Identifikation eine drahtlose Transpondereinrichtung aufweist und dem Lagerregal (10) eine Kommunikationseinrichtung für drahtlose Transponder beigeordnet ist, die zur Übermittlung von Identifikationsdaten an den Rechner (20) ausgebildet ist.

4. Lagerregal nach Anspruch 3, **dadurch gekennzeichnet, dass** die drahtlose Transpondereinrichtung ein RFID-Etikett (27) aufweist.

5. Lagerregal nach Anspruch 3 oder 4, **dadurch gekennzeichnet, dass** die Kommunikationseinrichtung eine RFID-Empfangseinrichtung (26) aufweist.

6. Lagerregal nach einem Ansprüche 1 bis 5, **dadurch gekennzeichnet, dass** der Rechner (20) zur Ermittlung eines freien Lagerplatzes einen Größendatenspeicher (35) mit den Platzbedarf eines Lagerguts (17, 17a) angebenden Daten aufweist.

7. Lagerregal nach einem der voranstehenden Ansprüche, **dadurch gekennzeichnet, dass** die Anzeigeeinrichtung (22, 23) zur Anzeige einer Voransicht des ermittelten freien Lagerplatzes ausgebildet ist.

8. Lagerregal nach einem der voranstehenden Ansprüche, **dadurch gekennzeichnet, dass** das Lagerregal (10) zur Kommunikation von Einheiten untereinander ein LAN (21) und/oder einen CAN-Bus aufweist.

9. Verfahren zur Ein- oder Auslagerung von Lagergut (17, 17a) in einem Lagerregal (10) nach einem der Ansprüche 1 bis 8, **gekennzeichnet durch** die Schritte
a. Identifikation des einzulagernden Lagergutes (17, 17a) **durch** eine Bedienperson oder **durch** die kontaktlose Erfassungseinrichtung;
b. Ermittlung freien Lagerplatzes **durch** den Rechner (20) anhand gespeicherter Belegungsinformationen oder gespeicherter Bilddaten;
c. Verfahren des Lagergutträgers (15) mit dem ermittelten freien Lagerplatz in die Zugangöffnung (18);
d. Einlagerung des Lagerguts (17, 17a);
e. Erfassen eines Bildes (39a) des Lagergutträgers (15) vor einer Ein- oder Auslagerung;
f. Erfassen eines Bildes (39b) des Lagergutträgers (15) nach einer Ein- oder Auslagerung und
g. Vergleichen der Bilder (39a, 39b);
h. Kennzeichnen von Rasterelementen in dem Belegungsinformationsspeicher (37) als frei oder belegt anhand des Ergebnisses des Vergleichs.

10. Verfahren nach Anspruch 9, **dadurch gekennzeichnet, dass** der bei Einlagerung durch den Rechner (20) ermittelte Lagerplatz einer Bedienperson mittels der Anzeigeeinrichtung (22, 23) angezeigt wird und von dieser abgelehnt werden kann, worauf ein weiterer freier Lagerplatz ermittelt wird.

11. Verfahren nach Anspruch 9, **dadurch gekennzeichnet, dass** der bei Auslagerung durch den Rechner (20) ermittelte Lagerplatz einer Bedienperson mittels der Anzeigeeinrichtung (22, 23) angezeigt wird.

12. Verfahren nach einem der Ansprüche 10 oder 11, **dadurch gekennzeichnet, dass** die Bilddatenverarbeitungseinrichtung (38) die digitalen Bilddaten in ein Raster (38a) aufteilt, dessen Rasterelemente in einem Belegungsinformationsspeicher (37) als frei oder belegt gekennzeichnet werden können.

13. Verfahren nach Anspruch 12, **dadurch gekennzeichnet, dass** die Bilderfassungseinrichtung (38) zum Abgleich des Belegungsinformationsspeichers (37) vor und nach der Ein- oder Auslagerung ein Bild (39a, 39b) des Lagergutträgers (15) erfasst und an den Bilddatenarchivspeicher (34) übermittelt.

14. Verfahren nach Anspruch 13, **dadurch gekennzeichnet, dass** die Bilddatenverarbeitungseinrichtung (38) zum Abgleich des Belegungsinformationsspeichers (37) die Rasterelemente des vor der Ein- oder Auslagerung erfassten Bildes (39a) mit denen des nach der Ein- oder Auslagerung erfassten Bildes (39b) vergleicht und bei einer Veränderung in einem Rasterelement einen diesem zugeordneten Belegungsstatus anpasst.

15. Verfahren nach Anspruch 14, **dadurch gekennzeichnet, dass** die Bilddatenverarbeitungseinrichtung (38) für jedes Pixel eines Rasterelements eine Differenz zwischen dem Pixel des vor der Ein- oder Auslagerung erfassten Bildes (39a) und dem Pixel des nach der Ein- oder Auslagerung erfassten Bildes (39b) bildet und die Differenzen innerhalb eines Rasterelements aufsummiert, um einen Ähnlichkeitswert zu berechnen.

16. Verfahren nach einem der Ansprüche 12 bis 15, **dadurch gekennzeichnet, dass** die Bilderfassungseinrichtung (24) zum Erkennen freier Rasterelemente ein Verfahren mit folgenden Schritten durchführt:
a. Ermitteln des Anteils der Pixel, deren Farbwerte in einem Identifikationsbereich liegen;
b. Markierung des Rasterelements als unbelegt, wenn der Anteil einen definierten Grenzwert überschreitet.

17. Verfahren nach Anspruch 16, **dadurch gekennzeichnet, dass** die Bilderfassungseinrichtung (24) das Verfahren zum Erkennen freier Rasterelemente für jedes Rasterelement eines Lagergutträgers (15) durchführt.

18. Verfahren nach einem der Ansprüche 9 bis 17, **dadurch gekennzeichnet, dass** der Rechner (20) eine Lagerdatenbank (36) aufweist, in der Lagerorte und/oder Lagermengen des Lagergutes (17, 17a) abgelegt werden.

19. Verfahren nach Anspruch 18, soweit auf Anspruch 12 rückbezogen, **dadurch gekennzeichnet, dass** der Rechner (20) bei Abgleich des Belegungsinformationsspeichers (37) den anhand der digitalen Bildinformationen ermittelten Lagerort und die Identifikation des Lagergutes (17) in der Lagerdatenbank (36) ablegt.

20. Verfahren nach einem der Ansprüche 18 oder 19, **dadurch gekennzeichnet, dass** der Rechner (20) vor und nach dem Ein- oder Auslagervorgang eine Liste der in dem Lagergutträger (15) enthaltenen Lagergüter (17) erstellt und durch einen Vergleich der Listen die entnommenen und eingelagerten Lagergüter (17, 17a) bestimmt.

21. Computerprogrammprodukt zur Durchführung des Verfahrens nach einem der Ansprüche 9 bis 20 in einem Lagerregal nach einem der Ansprüche 1 bis 8, wobei das Computerprogrammprodukt durch den Rechrer (20) ausgeführt wird.

## Claims

1. A storage rack (10) with a multiplicity of beam supports (14) one arranged upon the other for supporting storage product carriers (15) that are conveyable by means of an automatic charging and withdrawal device (13),
with at least one access opening (18) for supplying and removing the storage product carriers (15),
with a calculator (20), in which it is memorized information about stored storage product (17, 17a),
wherein at least one image pickup device (24) is provided that is capable of optically recording the storage product (17,17a) deposited in the storage product carriers (15) and can generate the digital image information out of it,
wherein the digital image information is memorized in the calculator (20) and is retrieved by means of a display device (22, 23), wherein the calculator (20) includes an image data archive memory (34) for archiving the digital image information of the storage product carriers (15) and an image data processing device (38), **characterized in that**
a selection device is associated with the display device (22) by which a storage product carrier (15) is selectable with the help of the digital image information and which is movable in the access opening (18) by means of the calculator (20), wherein
the calculator (20) includes an image data archive memory (34) for archiving the digital image information of the storage product carriers (15) in the image data archive memory (34), wherein the image is deposited by the calculator (20) in the image data archive memory (34) with the information, whether the image represents a state before or after an acting of an operator, wherein the image data processing device (38) is configured to detect changes of the charging situation of storage product carriers (15) and/or to detect vacant storage places with the help of the digital image information from the image data archive memory (34) by means of a comparison of image information that is picked up before and after an acting of an operator.

2. The storage rack according to claim 1, **characterized in that** the storage rack (10) includes a contactless recording device (26) for detecting storage product (17, 17a).

3. The storage rack according to claim 2, **characterized in that** the storage product (17, 17a) includes a wireless transponder device for its identification and a communication device for wireless transponders is associated with the storage rack (10), which is configured to transmit identification data to the calculator (20).

4. The storage rack according to claim 3, **characterized in that** the wireless transponder device includes an RFID label (27).

5. The storage rack according to claim 3 or 4, **characterized in that** the communication device includes an RFID receiving device (26).

6. The storage rack according to any of the claims 1 to 5, **characterized in that** the calculator (20) includes a size data memory (35) with data indicating the space required by a storage product (17, 17a) for determining a vacant storage place.

7. The storage rack according to any of the preceding claims, **characterized in that** the display device (22, 23) is configured to display a preview of the determined vacant storage place.

8. The storage rack according to any of the preceding claims, **characterized in that** the storage rack (10) includes a LAN (21) and/or a can CAN bus for communication of units among themselves.

9. A method of charging or withdrawing storage product (17, 17a) in a storage rack (10) according to any of the claims 1 to 8, **characterized by** the steps
a. identification of the storage product (17, 17a) to be stored by an operator or by the contactless recording device;
b. determination of vacant storage place by the calculator (20) with the help of memorized occupancy information or memorized image data;
c. moving the storage product carrier (15) with the determined vacant storage place in the access opening (18);
d. charging the storage product (17, 17a);
e. recording an image (39a) of the storage product carrier (15) before a charging or withdrawal;
f. recording an image (39b) of the storage product carrier (15) after a charging or withdrawal;
g. comparing the images (39a, 39b);
h. characterizing raster elements in the occupancy information memory (37) as vacant or occupied with the help of the result of the comparison.

10. The method according to claim 9, **characterized in that** the storage place determined by the calculator (20) during the charging is displayed to an operator by means of the display device (22, 23) and can be declined by the operator, whereupon another vacant storage place is determined.

11. The method according to claim 9, **characterized in that** the storage place determined by the calculator (20) during the withdrawal is displayed to an operator by means of the display device (22, 23).

12. The method according to any of the claims 10 or 11, **characterized in that** the image data processing device (38) divides the digital image data into a raster (38a), the raster elements of which can be characterized as vacant or occupied in an occupancy information memory (37).

13. The method according to claim 12, **characterized in that** the image recording device (38) records an image (39a, 39b) of the storage product carrier (15) for comparing the occupancy information memory (37) before and after the charging or withdrawal and transmits the image (39a, 39b) to the image data archive memory (34).

14. The method according to claim 13, **characterized in that** the image data processing device (38) compares the raster elements of the image (39a) recorded before the charging or withdrawal with those of the image (39b) recorded after the charging or withdrawal for comparing the occupancy information memory (37) and adapts an occupancy status associated with the raster element in case of a change in this raster element.

15. The method according to claim 14, **characterized in that** the image data processing device (38) summarizes for each pixel of a raster element a difference between the pixel of the image (39a) recorded before the charging or withdrawal and the pixel of the image (39b) recorded after the charging or withdrawal and summarizes the differences within one raster element for calculating a similarity value.

16. The method according to any of the claims 12 to 15, **characterized in that** the image recording device (24) performs a method with the following steps for detecting vacant raster elements:
a) determining the share of the pixels, of which the colour value is in an identification range;
b) Marking the raster element as unoccupied when the share exceeds a defined limit value.

17. The method according to claim 16, **characterized in that** the image recording device (24) performs the method for detecting vacant raster elements for each raster element of a storage product carrier (15).

18. The method according to any of the claims 9 to 17, **characterized in that** the calculator (20) includes a storage database (36), in which storage locations and/or storage amounts of the storage product (17, 17a) are memorized.

19. The method according to claim 18, as far as referenced to claim 12, **characterized in that** the calculator (20) memorizes the storage location determined with the help of the digital image information and the identification of the storage product (17) in the storage database (36) when comparing the occupancy information memory (37).

20. The method according to any of the claims 18 or 19, **characterized in that** the calculator (20) generates a list of the storage products (17) contained in the storage product carrier (15) before and after the charging or withdrawal and identifies the withdrawn and charged storage products (17, 17a) by comparison of the lists.

21. A computer program product for performing the method according to any of the claims 9 to 20 in a storage rack according to any of the claims 1 to 8, wherein the computer program product is performed by the calculator (20).

## Revendications

1. Rayonnage de stockage (10) comprenant une pluralité de montants porteurs (14) agencés les uns au-dessus des autres destinés à soutenir des supports de produits à stocker (15) qui peuvent être convoyés au moyen d'un dispositif automatique de chargement et de déchargement (13), présentant au moins une ouverture d'accès (18) pour l'amenée et l'enlèvement des supports de produits à stocker (15),
comprenant un calculateur (20) dans lequel sont mémorisées des informations concernant les produits à stocker entreposés (17, 17a),
dans lequel il est prévu au moins un système de prise d'images (24), qui convient pour la détection optique des produits à stocker (17, 17a) déposés dans les supports de produits à stocker (15) et qui est capable d'engendrer une information d'image numérique à partir de cette détection,
dans lequel l'information d'image numérique est mémorisée dans le calculateur (20) et est interrogée au moyen d'un système d'affichage (22, 23), dans lequel le calculateur (20) comprend une mémoire archive de données image (34) pour archiver l'information d'image numérique des supports pour produits à stocker (15), et un système de traitement de données image (38), **caractérisé en ce que**
au système d'affichage (22) est associé un moyen de sélection au moyen duquel un support pour produits à stocker (15) peut être sélectionné en s'aidant des informations d'image numérique, et peut être déplacé jusque dans l'ouverture d'accès (18) au moyen du calculateur (20), dans lequel
le calculateur (20) comprend une mémoire archive de données image (34) pour archiver l'information d'image numérique des supports pour produits à stocker (15) dans la mémoire archive de données image (34), dans lequel l'image est déposée dans la mémoire archive de données image (34) par le calculateur (20) avec l'information selon laquelle l'image représente une situation avant ou après une intervention d'un utilisateur, dans lequel le système de traitement de données image (38) est réalisé pour reconnaître des modifications de la situation de chargement des supports pour produits à stocker (15) et/ou pour reconnaître des emplacements de stockage libres au moyen des informations d'image numérique provenant de la mémoire archive de données image (34), au moyen d'une comparaison d'informations d'image qui ont été prises avant et après une intervention d'un utilisateur.

2. Rayonnage de stockage selon la revendication 1, **caractérisé en ce que** le rayonnage de stockage (10) comprend un système de détection sans contact (26) pour la reconnaissance de produits à stocker (17, 17a).

3. Rayonnage de stockage selon la revendication 2, **caractérisé en ce que** le produit à stocker (17, 17a) comprend, pour son identification, un système à transpondeur sans fil, et au rayonnage de stockage (10) est associé un système de communication pour des transpondeurs sans fil, qui est réalisé pour la transmission de données d'identification au calculateur (20).

4. Rayonnage de stockage selon la revendication 3, **caractérisé en ce que** le système à transpondeur sans fil comprend une étiquette RFID (27).

5. Rayonnage de stockage selon la revendication 3 ou 4, **caractérisé en ce que** le système de communication comprend un dispositif de réception RFID (26).

6. Rayonnage de stockage selon l'une des revendications 1 à 5, **caractérisé en ce que** le calculateur (20) comprend, pour déterminer un emplacement de stockage libre, une mémoire de données dimensionnelles (35) avec des données qui indiquent le besoin en place d'un produit à stocker (17, 17a).

7. Rayonnage de stockage selon l'une des revendications précédentes, **caractérisé en ce que** le système d'affichage (22, 23) est réalisé pour afficher une vue préalable de l'emplacement de stockage libre déterminé.

8. Rayonnage de stockage selon l'une des revendications précédentes, **caractérisé en ce que** le rayonnage de stockage (10) comprend un réseau LAN (21) et/ou un bus CAN pour la communication des unités les unes avec les autres.

9. Procédé pour l'entrée en stock ou la sortie de stock de produits à stocker (17, 17a) dans un rayonnage de stockage (10) selon l'une des revendications 1 à 8, **caractérisé par** les étapes suivantes :
a) identification du produit à stocker à entreposer (17, 17a) par un opérateur ou par un dispositif de détection sans contact;
b) détermination d'emplacements de stockage libre par le calculateur (20) au moyen d'informations d'occupation mémorisées ou de données image mémorisées;
c) déplacement du support de produit à stocker (15) à l'emplacement de stockage libre déterminé jusque dans l'ouverture d'accès (18);
d) stockage du produit à stocker (17, 17a);
e) prise d'une image (39a) du support de produit à stocker (15) avant une mise en stock ou une sortie de stock;
f) prise d'une image (39b) du support de produit à stocker (15) après une mise en stock ou une sortie de stock, et
g) comparaison des images (39a, 39b);
h) caractérisation d'éléments de trame dans la mémoire d'informations d'occupation (37) comme libres ou occupés au moyen de résultats de la comparaison.

10. Procédé selon la revendication 9, **caractérisé en ce que** l'emplacement de stockage déterminé par le calculateur (20) lors de la mise en stock est indiqué à un opérateur au moyen du système d'affichage (22, 23) est peut être refusé par celui-ci, suite à quoi un autre emplacement de stockage libre est déterminé.

11. Procédé selon la revendication 9, **caractérisé en ce que** l'emplacement de stockage déterminé par le calculateur (20) lors de la sortie de stock est indiqué à un opérateur au moyen du système d'affichage (22, 23).

12. Procédé selon l'une des revendications 10 ou 11, **caractérisé en ce que** le système de traitement de données image (38) subdivise les données images numériques dans une trame (38a), dont les éléments de trame peuvent être caractérisés comme libres ou occupés dans une mémoire d'informations d'occupation (37).

13. Procédé selon la revendication 12, **caractérisé en ce que** le système de détection d'image (38), pour comparer la mémoire d'informations d'occupation (37) avant et après la mise en stock ou la sortie de stock, prend une image (39a, 39b) du support de produit à stocker (15) et la transmet à la mémoire archive de données image (34).

14. Procédé selon la revendication 13, **caractérisé en ce que** le système de traitement de données image (38), pour la comparaison de la mémoire d'informations d'occupation (37), compare les éléments de trame de l'image (39a) prises avant la mise en stock ou la sortie de stock, avec ceux de l'image (39b) prise après la mise en stock ou la sortie de stock, et en cas de modification dans un élément de trame, il adapte un statut d'occupation associé à cet élément.

15. Procédé selon la revendication 14, **caractérisé en ce que** le système de traitement de données image (38) forme, pour chaque pixel d'un élément de trame, une différence entre le pixel de l'image (39a) prise avant la mise en stock ou la sortie de stock, et le pixel de l'image (39b) prise après la mise en stock ou la sortie de stock, et effectue la somme des différences à l'intérieur d'un élément de trame, afin de calculer un facteur de similitude.

16. Procédé selon l'une des revendications 12 à 15, **caractérisé en ce que** le système de prise d'images (24) met en oeuvre, pour reconnaître des éléments de trame libres, un procédé avec les étapes suivantes :
a) détermination de la part des pixels dont les valeurs de couleur tombent dans une plage d'identification;
b) marquage de l'élément de trame comme non occupé lorsque la part dépasse une valeur limite définie.

17. Procédé selon la revendication 16, **caractérisé en ce que** le système de prise d'images (24) met en oeuvre le procédé pour reconnaître des éléments de trame libre pour chaque élément de trame d'un support de produit à stocker (15).

18. Procédé selon l'une des revendications 9 à 17, **caractérisé en ce que** le calculateur (20) comprend une base de données de stockage (36) dans laquelle sont déposés des emplacements de stockage et/ou des quantités de stockage du produit à stocker (17, 17a).

19. Procédé selon la revendication 18, prise en dépendance de la revendication 12, **caractérisé en ce que** le calculateur (20), lors de la comparaison de la mémoire d'informations d'occupation (37), dépose dans la base de données de stockage (36) l'emplacement de stockage déterminé au moyen des informations d'image numérique, et l'identification du produit à stocker (17).

20. Procédé selon l'une des revendications 18 ou 19, **caractérisé en ce que** le calculateur (20) établit, avant et après l'opération de mise en stock ou de sortie de stock, une liste des produits à stocker (17) contenus dans le support pour produit à stocker (15) et détermine, par comparaison des listes, les produits à stocker (17, 17a) qui ont été enlevés et qui ont été mis en stock.

21. Produit de programme d'ordinateur pour mettre en oeuvre le procédé selon l'une des revendications 9 à 20 dans un rayonnage de stockage selon l'une des revendications 1 à 8, dans lequel le produit de programme d'ordinateur est exécuté par le calculateur (20).
